# EUROPEAN PATENT SPECIFICATION

(11) **EP 0 214 751 B1**
(45) Date of publication and mention of the grant of the patent: **15.06.1994**
(21) Application number: 86305905.1
(22) Date of filing: 31.07.1986
(51) Int. Cl.: G06F 9/44

(54) **A method for vectorizing and compiling object code**
Verfahren zur Vektorisation und Objektkodekompilation
Méthode de vectorisation et de compilation de code objet

(30) Priority: 07.08.1985 US 763481
(43) Date of publication of application: 18.03.1987
(73) Proprietor: International Business Machines Corporation, Armonk, N.Y. 10504 (US)
(72) Inventor: Scarborough, Randolph Gregory, Palo Alto CA 94306 (US)
(74) Representative: Burt, Roger James, Dr.

(56) References cited:
- PROCEEDINGS OF THE ACM SIGSOFT/SIGPLAN SOFTWARE ENGINEERING SYMPOSIUM ONPRACTICAL SOFTWARE DEVELOPMENT ENVIRONMENTS, Pittsburg, Pennsylvania, 23rd-25thApril 1984, vol. 19, no. 5, pages 233-246, ACM; J.R. ALLEN et al.: "Automaticloop interchange"
- K. HWANG: "Supercomuters: design and applications", 1984, pages 186-203, IEEE,New York, US; J.R. ALLEN et al.: "PFC: A program to convert fortranto parallel form"
- K. HWANG: "Supercomputers: design and applications". 1984, pages 163-178, IEEE,New York, US; D.J. KUCK et al.: "The structure of an advancedretargetable vectorizer"

## Description

This invention relates to a method for vectorizing and compiling object code.

Most programs written for computers contain loops and nests of loops for performing repetitive operations on sequences of data. These programs direct that operations be done in a well-defined order. Because single- instruction, single-data path (SISD) machines have historically been the most pervasive type of machines, the order is one that is readily executable on such an SISD machine. This very same order may not be valid on a single-instruction, multiple-data path (SIMD) machine, where successive elements are taken in that order and are operated upon independently in parallel. Other orders may exist, however, in which the elements validly may be taken and operated upon independently in parallel. There exists, therefore, a requirement to ascertain those portions of programs and those orderings of operations for which the SIMD machine may be used to execute the repetitive operations. This requirement and its concomitant result is known as vectorization. It is thus desired to start with a program written for a scalar SISD machine and to produce object code for execution on a vector SIMD machine.

Vectorization is of interest for at least three reasons. First is the large existing body of programming written for SISD machines. An automatic vectorizer makes it possible for the existing programs to be executed on an SIMD machine without requiring that the programs be rewritten. Second is portability. An automatic vectorizer makes it possible to execute the same program, without change, on both SISD and SIMD machines. The third is speed. An automatic vectorizer renders it feasible for the same program to be OPTIMISED for scalar when it is run on an SISD machine and to be optimised for vector when it is run on an SIMD machine.

The objective of vectorization is to find sequential scalar operations that can be converted to equivalent parallel vector operations in order to take advantage of vector SIMD machines. Operations are equivalent if, using them, the program produces the same result.

In general, a statement may be vectorized if it does not require, as an input on one iteration of a loop, a value it computed on an earlier iteration of the loop. If no value computed in one iteration of a DO-loop is used in a later iteration, then all of the data values can be computed in parallel. This independence of data values from one DO-loop iteration to the next is a factor in allowing execution on an SIMD machine. In contrast, if a value is computed in one iteration and then used in a later iteration, the DO-loop cannot in general be vectorized.

Vectorization of sequential operations requires that the dependences in the program be determined. A statement in a source program may be dependent upon another statement in the program because the flow of control is affected by one of them or because they both use the same storage locations. Both kinds of dependences must be considered when the program is analysed for vectorization.

Among the most pertinent prior art references are those by Allen, "Dependence Analysis for Subscripted Variables and Its Application to Program Transformations", Ph.D. thesis, Computer Science, Rice University, April 1983; and Kennedy, "Automatic Translation of FORTRAN Programs to Vector Form", Rice University Technical Report 476-029-4, October 1980. The aforementioned Allen and Kennedy references describe the scalar-to-vector conversion steps of (a) forming a dependence graph, (b) partitioning the graph into topologically significant regions, (c) examining the regions in order to ascertain which regions are executable on an SIMD machine, and (d) generating scalar or vector code based on the results of (c).

In the prior art, recurrences among program statements in selected ones of a nest of loops prevented vectorization of those program statements in the loops which generated the recurrence, and furthermore prevented vectorization of those program statements in the outer loops containing those loops. It is known that the interchange of the order of loops affects vectorizability of statements in the loops. However, because of the complexity and expense involved in identification and interchange of the loops, this has been sparingly employed only on the innermost and next-to-innermost loops.

Reference is also made to "The Proceedings of the ACM SIGSOFT/SIGPLAN Software Engineering Symposium on Practical Software Development" Environments April 1984 vol 19, No 5, pages 233-246. The paper by J R Allen and K Kennedy discusses the data dependences involved in determining when loops may be safely and profitably interchanged. The underlying theory is described as it has been implemented in a program (PFc) which attempts to uncover operations in sequential FORTRAN code that may be safely written as vector operations.

In a tutorial "Supercomputers: Design and Applications" 1984 pages 186-203 IEEE, New York, a paper by J R Allen and K Kennedy describes the PFC program as a case study of the application of theoretical techniques to a practical implementation problem making vector operations available to the FORTRAN programmer.

It is the object of the invention to improve on prior art vectorization methods.

According to the present invention, therefore, there is provided a method of operating a computer to compile object code for execution on an SIMD machine, said object code being derived from procedural language source code statements, said source code including nested loops in which at least one loop is innermost and at least one loop is outermost, comprising the steps of: (a) converting source code into an intermediate language string and optimising said string; (b) forming a dependence graph from the string, said dependence graph including at least one node, the nodes of the dependence graph representing statements in the string; (c) partitioning the dependence graph into strongly connected regions, SCRs, and analysing said SCRs to ascertain whether outermost loops corresponding to said SCRs may be vectorized for execution on said SIMD machine; (d) carrying out step (c) recursively on said SCRs of said partition; (e) generating code for said SIMD machine according to which loops have been found to be vectorisable; characterised in that said analysis of step (c) comprises: (1) ascertaining for each SCR whether the corresponding outermost loop can be interchanged with each successive inner loop until said outermost loop becomes the innermost loop without changing the semantic effect of any of the dependences relating to that outermost loop; and (2) forming a subgraph of all such interchangeable dependences and all loop-independent dependences and marking the corresponding loops as vectorizable if said subgraph is acyclic.

The invention is based upon the unexpected critical observation that, in the dependence graph representing a region of a program at and inside a selected level, level n, only the innermost-sensitive level n dependence edges and the loop-independent dependence edges need be considered to ascertain if the program can be vectorized at level n. The edges connect nodes of the graph and represent the dependencies between the statements represented at those nodes. The region can be vectorized if the graph formed from just these two classes of edges (the innermost-sensitive level n edges and the loop-independent edges) has no cycles. This contrasts with the method of the prior art, in which all edges in the region, including those at level n, those inside level n, and those which are loop-independent, are included in the graph. A cycle occurs when it is possible to start from one node and, after passing to at least one other node, to return to the first node by tracing the connecting edges.

The prior art, having failed to discover and then identify the significance of innermost-sensitive edges, also failed to exclude from the graph the dependence edges at levels inside level n. By applying the present invention, these edges are now seen not to be relevant to the vectorizability of statements at level n. The prior art will, in consequence, more often find a cycle in the graph since there are more edges in the graph, and therefore will fail to ascertain that a very large class of statements may be vectorized at level n. For example, any cycle caused by edges inside level n will prevent vectorization of the statements at level n. The Allen and Kennedy references, once detecting a cycle, dedicate the program statements to scalar processing at level n.

The present invention is further described hereinafter with, reference to the accompanying drawings in which:
Figure 1 is a representation of a fragment of FORTRAN source code with loops and dependences;
Figures 2A-2B are pictorial representations of dependence graphs including the dependence edges detected according to the prior art and the invention, respectively;

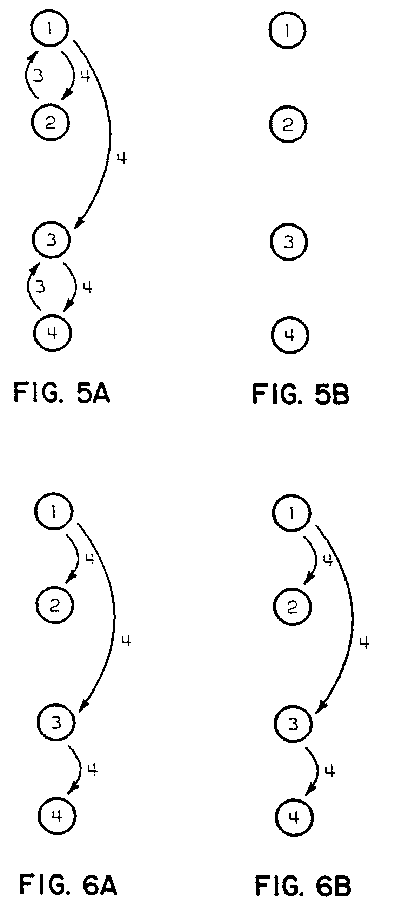

Figures 3A-6A are pictorial representations of the resolution results according to the prior art for identifying vectorizable statements in the dependence graph; and
Figures 3B-6B are pictorial representations of the corresponding resolution results according to the method of this invention.

In order to appreciate the invention, a prefatory discussion of the concepts of control and data dependence, dependence level and interchange, and sectioning for vector execution will be set forth. Following this will be an general discussion of the present method. Lastly, an illustrative example referencing the aforementioned drawings will be set out.

### Control Dependence

Control dependences arise because one statement determines whether a second statement is to be executed. In the following example, statement 2 depends on statement 1:
DO 3 I=1,N
1 IF (A(I).GT.0.0) GOTO 3
2 A(I)=B(I)+1.0
3 CONTINUE
The results of the test in statement 1 determine whether statement 2 is executed. The execution of statement 2 depends upon the execution of statement 1. It should be appreciated that IF-conversion is a technique used to convert control dependence to data dependence. The following is an illustration of such a change:
DO 3 I=1,N
1 L=A(I).LE.0.0
2 IF(L) A(I)=B(I)+1.0
3 CONTINUE
Statement 2 contains the logical scalar L. On each iteration of the loop, L specifies whether or not the corresponding result element in A(I) should be stored. Therefore, the control dependence has been transformed into a conditional assignment statement involving data elements referenced within the statement. The two loops have the same effect.

### Data Dependence

Data dependence arises in one of three ways. First, a statement T depends upon a statement S if S defines a value and T references it. Second, a statement T depends upon a statement S if S references a value and T defines it. Third, a statement T depends upon statement S if S stores a value which T also stores.

The first dependence is also called true dependence. It may be illustrated as:
S: X=
T: =X
Clearly, S must execute before T can execute because S defines a value used by T. The execution of T depends upon the execution of S being complete.

The second dependence is also termed anti-dependence. It may be illustrated as:
S: =X
T: X=
Again, S must execute before T; otherwise, T would store the variable X and S would use the wrong value. Again, the execution of T depends upon the execution of S being complete.

The third form of data dependence is also termed output dependence. It may be illustrated as:
S: X=
T: X=
S must execute before T or else the wrong value will be left behind in the variable X. As in the above two cases, the execution of T depends upon the execution of S being complete.

### Dependence Level

Dependences attach to a particular DO-loop level in the loop surrounding a group of statements. Some dependences are always present. For instance:
DO J=
DO I=
S: V=A(I,J)*B(I,J)
T: Z(I,J)=V
T always depends upon S because on every iteration of every loop there is a true dependence involving variable V. Dependences of this type are called loop-independent dependences. That is, they are independent of the operation of the loops surrounding them.

Some dependences are present at one loop level but not another. Thus:
DO J=
DO I=
S: A(I+1,J)=A(I,J)
There is true dependence at the level of the loop with index I. An element stored on iteration 2, for example, will be fetched on iteration 3. This type of dependence is termed a recurrence. But there is no dependence at level J. More particularly, no element stored on one iteration of loop J is referenced on any other iteration.

### Dependence Interchange

When a given loop in a nest of DO-loops is chosen for execution in an SIMD machine, each vector (SIMD) instruction will operate on successive data elements selected by that given DO-loop index. For example, if the J loop (the loop with index J) is vectorized in the nest
DO 1 K=1,N
DO 1 J=1,N
DO 1 I=1,N
1 A(I,J,K)=B(I,J,K)
then a vector LOAD instruction would fetch the elements of B and store the elements of A in the order (1,1,1), (1,2,1), ..., (1,n,1). This is a different order than that which would be used in scalar mode where the innermost DO-loop with index I would cycle most rapidly. In fact, the vector order is exactly that which would have been seen in scalar mode if the J loop had been interchanged with its inner neighbours until it became the innermost loop, i.e.
DO 1 K=1,N
DO 1 I=1,N
DO 1 J=1,N
1 A(I,J,K)=B(I,J,K)
In order for a given loop to be chosen for execution in an SIMD machine, this interchange must be valid. That is, it must preserve the semantics of the source code.

For the K loop in the original example to be vectorizable, the loop ordering
DO 1 J=1,N
DO 1 I=1,N
DO 1 K=1,N
1 A(I,J,K)=B(I,J,K)
would have to generate the same results as the original. The other loops need not be permuted. It is necessary only to inquire if the loop of interest may be moved inside of all of the other loops.

Occasionally, this loop interchange is not possible. In the nest: DO 1 J=1,N
DO 1 I=1,N
1 A(I-1,J+1)=A(I,J)
there is a dependence at the level of the J loop. Here, a value stored on one iteration of J is fetched on the next. Many dependences do not affect the results of a process when loops are interchanged. However, in this example, the J loop could not be interchanged with the I loop because the answers would be changed. This illustrates an interchange-preventing dependence. Of course, it prevents the vectorization of the J loop.

In a multilevel nest, a dependence might be interchangeable part of the way into the innermost level but then be blocked. Such a dependence is termed an innermost-preventing dependence because that level of the loop cannot be moved to the innermost level. If a loop cannot be moved into the innermost level, then it cannot be vectorized.

### Sectioning for Vector Execution

As discussed above, in order to be vectorizable (rendered fit for SIMD execution), a loop must be validly movable to the innermost position. It is not necessary to physically render this interchange. Instead, during the compiler portion of code generation, there are generated vector instructions which access groups or sections of elements selected by the chosen loop. The loop controls for the chosen loop are left in their original place and are changed so that they are incremented by the number of elements in the groups processed by the individual instructions.

### Present Method

In the method of this invention, a graph containing all dependence edges in the program is partitioned into strongly connected regions at the outermost level. Each such region is considered in turn. Within each region, each dependence at the DO-loop level defining the region is considered. The method attempts to interchange this dependence until the original loop has become the innermost loop. If this interchange is not possible, then the region cannot be executed by an SIMD machine at the level defining the region. The method thus terminates for this region at this level. On the other hand, if interchange is possible but the dependence itself disappears on its way into the innermost loop because it is absorbed by a dependence at an intervening loop, then the dependence is ignored since it will not affect the SIMD execution at the level defining the region. Otherwise, the dependence is noted as an "innermost- sensitive" dependence for the region.

Advantageously, therefore dependences of inner loops and those level n dependences which have disappeared during interchange are excluded. Unfortunately, when a level n loop contains two or more loops at level n+1, the vectorization cannot be executed at level n if statements from more than one of these loops are strongly connected at level n.

Next, using only the "innermost-sensitive" dependences and the loop-independent dependences in the region, a graph is formed. If this graph has a cycle, then the region may not be executed SIMD at the level defining the region. Otherwise, the region is eligible for SIMD execution even though other loops inside the loop defining the region may have recurrences.

At this point, it is noted that the region may be executed SIMD. Inner regions are then recursively considered, each being marked in the same manner as executable validly in SIMD or not.

At this point, it should be apparent that the structure is quite different from that produced according to the prior art. In the prior art, the methods of Allen and Kennedy produced sequential DO statements for all regions containing recurrences. Further, their methods concluded that SIMD execution is possible only for the inner regions containing no recurrences. In the method of this invention, however, additional source code statements have been ascertained to be vectorizable at additional levels of nesting.

A refinement of the present invention allows the selection of an instruction path from a set of prospective instruction paths for converting the scalar procedural language source code to a code form suitable for execution on an SIMD machine. In this regard, the method then comprises the steps of (a) converting the source code into an intermediate language string and optimising the string; (b) forming a dependence graph from the string, the nodes of the graph representing statements in the string; and (c) ascertaining a least cost path through the dependence graph taking into account the type, number, and distribution of instructions, their execution time, and the cost of associated resources.

To typify this refinement, consider the following example. Let there exist a nest of loops which in general may be executed either by scalar or vector instructions with the vector (SIMD) machine applied to any of, but only one of, the loops in the nest. For instance, in the nest:
DO 1 K=1,N
DO 1 J=1,N
DO 1 I=1,N
A(I,J,K)=B(I,J,K)+P(J,K)*Q(J,K)
1 E(K,J,I)=F(K,J,I)+X(I,J)*Y(I,J)
there exist four possibilities for each statement (vectorize on K, J, I, or not at all). Thus, 16 possibilities exist for the combination of the two statements. The refined method ascertains the most rapidly executing among these possibilities. Several factors are to be considered in estimating the cost of execution. These include the cost of loop overhead, the cost of hardware instructions, and the cost of fetching and storing operands. It is appreciated that these costs will vary for the same statement as each enclosing loop is considered as the candidate for execution on the SIMD machine.

The refinement implements a modified least cost graph traversal algorithm. Heuristics must be employed to resolve, for example, when two statements originally from the same nest of loops but subsequently partitioned into independent regions of the graph may actually be merged back into the same set of loop controls when object code is generated for the statements.

The regions identified in the basic method (ie without the refinement) when each was marked as eligible or not for SIMD execution, are now sorted into topological order based upon dependence as part of that process. The least cost graph traversal of the refinement considers these regions in topological order beginning with a null first region and ending with a null final region. The refined method produces and maintains a list of the processor time required to execute the statements in subsets of these regions. The subsets always begin with the null first region in the topological ordering and always end with some other region in the ordering. Always included are all regions between the two. Each region on the particular path under consideration has its cost estimated for SISD or SIMD execution depending upon the execution possibility represented by the path.

Each element on the list represents the execution of the regions on the path from the null first region through the last region on the path with each region being executed in a particular manner, i.e. either SISD or SIMD. The refined method estimates the cost for executing this entire collection of the regions heuristically minimising the number of loop control statements which must be inserted. Once this cost has been ascertained, the next possible candidate regions for execution along this path are identified. These candidates will be the next region in the topological ordering executed SISD and, if valid for the region, SIMD. These candidates and the just estimated cost of execution to reach them are then posted onto the list of pending possible execution paths.

When a candidate region is marked as an SISD candidate, inner regions of that candidate subsequently will be considered as candidates, either SISD or SIMD. When a candidate region is marked as an SIMD candidate, all inner regions are SISD candidates and are bypassed to expedite processing.

The refined method iterates by selecting from all elements on the list the one with the next candidate having the minimal cost associated therewith along its particular path of execution possibilities, by ascertaining the cost of including it in execution with its predecessors, by locating its possible successors, and by posting them together with the cost of reaching them on the list of pending candidates. The refined method terminates when the null final region is selected as the minimal cost candidate to include on a path. The selected path represents a decision for each region as to whether that region is to be executed SISD or SIMD. It further represents a decision as to how the regions are to be merged into fewer regions for the purposes of minimising the loop control statements. The source code string is then reprocessed to implement these decisions. Optimisation of a source code string, in particular register optimisation, may then be performed and ultimately an object code generated.

### Illustrative Example

An illustrative example can show the difference in vectorizability discerned by prior art and by the current invention.

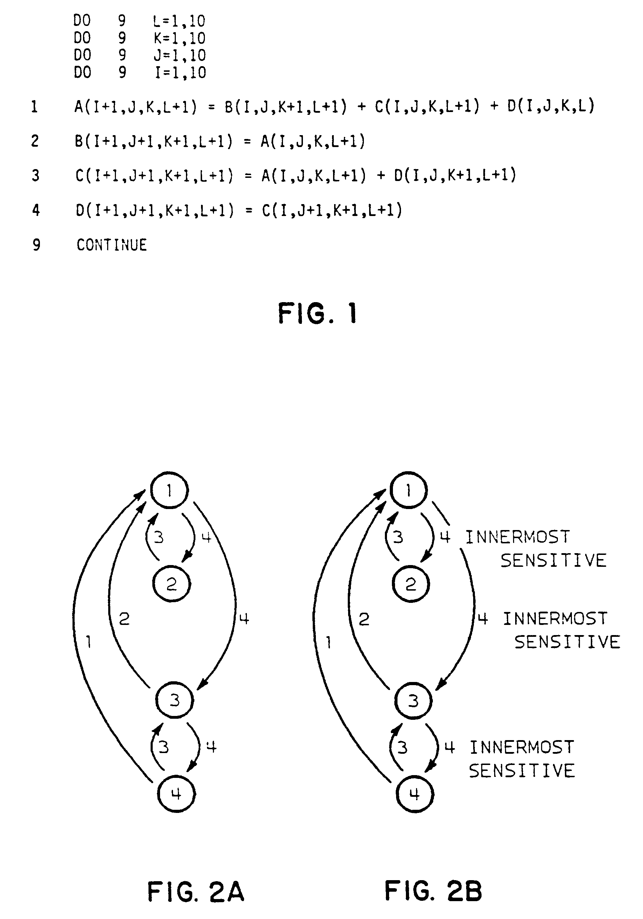

Figure 1 shows a fragment of a FORTRAN source code. This fragment contains four statements numbered 1 through 4. The statements are embedded within four DO loops. The first of these loops, DO 9 L=1,10, encloses all of the others. It is the outermost loop, and it is called the level 1 loop since it is the first level of loop encountered when moving from the outermost regions of the code fragment toward the innermost regions of the code fragment. The second loop is the DO K loop. This loop is the second level of loop encountered while progressing from outer to inner regions; it is therefore called the level 2 loop. DO J is a level 3 loop since it is the next level of loop encountered, and DO I is similarly a level 4 loop. The loop levels, in short, represent nesting levels: level 1 is the outermost level; level n is at the nth level of nesting.

The dependences in the fragment are illustrated with a graph. The statements in the fragment, numbered 1 through 4, are represented in the graph by circles containing respectively the numbers 1 through 4. A dependence from one statement to another is represented by an arrow from the circle for the first of these statements to the circle for the second of these statements. The arrow is annotated with a number showing which DO loop is responsible for creating the dependence. A dependence caused by the level 1 DO loop will be shown by the number 1.

Figure 2A shows the graph constructed by prior art for this program. Let us look, for purposes of understanding, at one of the arrows in this graph. The arrow from circle 3 to circle 4 represents a dependence from statement 3 to statement 4. The arrow is annotated with the number 4 indicating that the level 4 loop, the DO I loop, generates this dependence. Extracting from the original code fragment only the code relevant to this arrow makes clearer the dependence represented by the arrow:
DO 9 I=1,10
3 C(I+1,J+1,K+1,L+1) = ...
4 ... = C(I,J+1,K+1,L+1)
9 CONTINUE
There is an arrow from statement 3 to statement 4 generated by the DO I loop because statement 3 stores data which is fetched by statement 4 on a subsequent iteration of this loop. On the first iteration, for example, when variable I has the value 1, statement 3 stores the datum C(2,J+1,K+1,L+1); on the second iteration, when the variable I has value 2, this very same datum is fetched by statement 4. Statement 4 therefore depends upon statement 3. So, since there is a dependence from statement 3 to statement 4, and since the dependence is caused by the operation of the DO I loop (which is the level 4 loop in this example), an arrow is drawn from circle 3 to circle 4 in the graph and the arrow is annotated as level 4.

Let us look at a second arrow in the graph, also for purposes of understanding. The arrow from circle 4 to circle 1 represents a dependence from statement 4 to statement 1. The arrow is annotated with the number 1 indicating that the level 1 loop, the DO L loop, generates this dependence. Extracting from the original code fragment only the code relevant to this arrow makes clearer the dependence represented by the arrow:
DO 9 L=1,10
1 ... = D(I,J,K,L)
4 D(I+1,J+1,K+1,L+1) =
9 CONTINUE
There is an arrow from statement 4 to statement 1 generated by the DO L loop because statement 4 stores data which is fetched by statement 1 on a subsequent iteration of this loop. On the first iteration of DO L, for example, when variable L has the value 1, statement 4 will store the datum D(2,2,2,2). (It will store this datum when the inner loops also are on their first iterations with L=1.) On the second iteration of DO L, when the variable L has value 2, this very same datum is fetched by statement 1. (It will fetch this datum when the inner loops also are on their first iterations with L=2.) Statement 1 therefore depends upon statement 4--statement 1 cannot complete execution for a given iteration of loop L until statement 4 has completed execution for some preceding iteration of loop L. So, since there is a dependence from statement 4 to statement 1, and since the dependence is caused by the operation of the DO L loop (which is the level 1 loop in this example), an arrow is drawn from circle 4 to circle 1 in the graph and the arrow is annotated as level 1.

All of the arrows in Figure 2A are constructed by prior art. They all have meanings of the type just illustrated. A level 2 arrow from circle 3 to circle 1 means, for example, that statement 3 will store a datum on some iteration of the level 2 loop and that statement 1 will fetch the very same datum on some subsequent iteration of the level 2 loop.

Figure 2B differs from figure 2A in that by using the current invention the arrows are categorised as representing or not representing innermost sensitive dependences. An innermost sensitive dependence is one which persists when the DO loop generating the dependence is made to be the innermost loop. In the case of the level 4 dependence discussed above from statement 3 to statement 4, level 4 is in fact already the innermost level, since the DO I loop which causes it is already the innermost loop, and therefore the arrow representing the dependence is marked innermost sensitive. In the case of the level 1 dependence discussed above from statement 4 to statement 1, however, the dependence is not innermost sensitive.

This can be most easily seen by examining the code fragment
DO 9 K=1,10
DO 9 J=1,10
DO 9 I=1,10
DO 9 L=1,10
1 ... = D(I,J,K,L)
4 D(I+1,J+1,K+1,L+1) =
9 CONTINUE
in which the DO L loop, which originally gave rise to the dependence, has been made the innermost loop. Examining only the relevant part
DO 9 L=1,10
1 ... = D(I,J,K,L)
4 D(I+1,J+1,K+1,L+1) =
9 CONTINUE
of this code fragment, with DO L now the innermost loop, we see that on no iteration of DO L does any datum get stored by statement 4 and fetched by statement 1. The code may store, for example, D(2,5,5,5) on the first iteration of the loop, but if so then it will fetch D(2,6,6,6) on the second iteration. Consequently, when DO L is made the innermost loop, there is no longer a dependence from statement 4 to statement 1 for this loop, and therefore the dependence is marked as not innermost sensitive.

Now consider graphs 3 through 6. These are the graphs constructed while investigating the vectorizability the the program at levels 1 through 4 respectively. Graph 3A investigates the vectorization at level 1 by prior art. A graph constructed by prior art for level 1 will select, from the graph for the program, all arrows representing dependences at level 1 and any deeper levels. Since level 1 is the outermost level of the program, this selected graph will contain all arrows in the original graph. Prior art considers to be vectorizable those statements which do not depend upon themselves, directly or indirectly. It ascertains this dependence by examining the selected graph.

In terms of the graph, a statement depends upon itself if there is a sequence of arrows beginning at the circle representing the statement and ending back at that same circle.

Therefore, any circle for which there is a sequence of arrows starting and ending at the circle represents a statement which is not vectorizable.

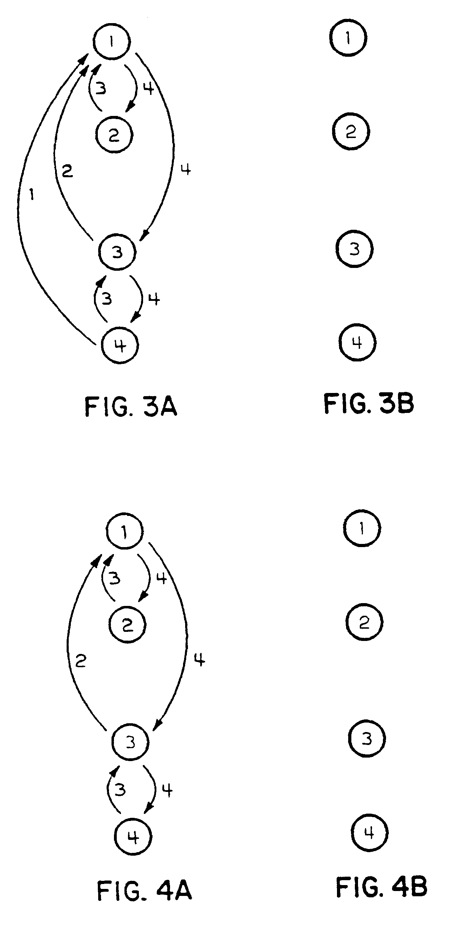

Examination of figure 3A shows that every statement is reachable from itself. Prior art therefore considers that at level 1, the DO L level, every statement depends upon itself and that no statement is vectorizable.

Graph 3B investigates the vectorization at level 1 pursuant to the current invention. Under the current invention, a graph constructed for level 1 will select, from the graph for the program, only arrows of two types: arrows representing loop-independent dependences and arrows representing level-1 innermost-sensitive dependences. We go to graph 2B, which contains the graph for the program. We look for arrows representing loop-independent dependences; these arrows would be annotated with the number 5. We find no such arrows. Next we look for arrows representing level-1 innermost-sensitive dependences; these arrows would be annotated with "1 innermost- sensitive" as explained in the foregoing. Again we find no such arrows, since all level-1 dependences represented in graph 2A were found by the method of this invention to be not innermost-sensitive. The graph constructed for investigating the vectorizability of the program at level 1, graph 3B, therefore contains no arrows at all. This invention has determined that none of the dependences present in the graph constructed by prior art is relevant to the vectorization of the program at level 1. Figure 3B therefore shows that no statement can be reached by a sequence of arrows beginning and ending at itself, and consequently that no statement depends upon itself. Every statement, in other words, is eligible pursuant to this invention for vectorization at level 1.

Graph 4B investigates the vectorization at level 2. It is constructed from those arrows in Graph 2B which are marked either "5" or "2 inner- most-sensitive". Again there are no such arrows. Again this invention has determined that none of the dependences present in the graph constructed by prior art is relevant to the vectorization of the program at level 1. Graph 5B is similar.

In Graph 6B, which investigates the vectorization at level 4, we incorporate those arrows in Graph 2B which are marked either "5" or "4 innermost-sensitive". Three such arrows exist. They do not prevent vectorization since they do not create a cycle in the graph.

### Machine Executability

It should be appreciated that the foregoing remarks have subsumed a familiarisation with SISD and SIMD processing. A typical SISD processor is described in Amdahl et al, US-A-3,400,371, "Data Processing System", issued September 3, 1968. Amdahl also described the necessary operating system environment by which procedural language source code sequences can be processed to produce object code in turn executable on SISD or SIMD processors. A high-level language FORTRAN compiler, the IBM VS FORTRAN compiler, is illustrative of the high-level procedural language source-to-object code converter to which this invention may be applied.

SIMD processors suitable for executing vector statements include those set out in Stokes et al, US-A-4,101,960, "Scientific Processor", issued July 18, 1978; Lorie et al, US-A-4,435,758, "Method for Conditional Branch Execution in SIMD Vector Processors", issued March 6, 1984; and the references cited therein.

## Claims

1. A method of operating a computer to compile object code for execution on an SIMD machine, said object code being derived from procedural language source code statements, said source code including nested loops in which at least one loop is innermost and at least one loop is outermost, comprising the steps of:
(a) converting source code into an intermediate language string and optimising said string;
(b) forming a dependence graph from the string, said dependence graph including at least one node, the nodes of the dependence graph representing statements in the string;
(c) partitioning the dependence graph into strongly connected regions, SCRs, and analysing said SCRs to ascertain whether outermost loops corresponding to said SCRs may be vectorized for execution on said SIMD machine;
(d) carrying out step (c) recursively on said SCRs of said partition;
(e) generating code for said SIMD machine according to which loops have been found to be vectorizable;
characterised in that said analysis of step (c) comprises:
(1) ascertaining for each SCR whether the corresponding outermost loop can be interchanged with each successive inner loop until said outermost loop becomes the innermost loop without changing the semantic effect of any of the dependences relating to that outermost loop; and
(2) forming a subgraph of all such interchangeable dependences and all loop-independent dependences and marking the corresponding loops as vectorizable if said subgraph is acyclic.

2. The method according to claim 1, wherein the source code procedural language statements are consistently selected from one strongly-typed language drawn from a set of strong-typed languages including FORTRAN, PL/1, PASCAL, ALGOL, ADA, and their equivalents.

3. The method according to claim 1 or 2 wherein said method further comprises the step of ascertaining in said SIMD machine a least-cost path through the dependence graph taking into account a predetermined type, number, and distribution of statements, execution time of the statements, and cost of associated resources.

## Patentansprüche

1. Betriebsverfahren für einen Rechner, um einen Objektcode zur Abarbeitung auf einer SIMD-Maschine zu kompilieren, wobei dieser Objektcode aus den Quellcodeanweisungen in der verfahrensorientierten Sprache abgeleitet wird, dieser Quellcode verschachtelte Schleifen enthält, von denen wenigstens eine Schleife die innerste und wenigstens eine Schleife die äußerste ist, und der die folgenden Schritte aufweist:
(a) Umwandeln des Quellcodes in eine Zeichenkette in einer Zwischensprache und Optimieren dieser Zeichenkette;
(b) Bilden eines Abhängigkeits-Graphen aus der Zeichenkette, wobei dieser Abhängigkeits-Graph wenigstens einen Knoten aufweist und diese Knoten des Abhängigkeits-Graphen Anweisungen in der Zeichenkette darstellen;
(c) Aufteilen dieses Abhängigkeits-Graphen in stark verbundene Bereiche, SCRs, und Analysieren dieser SCRs, um festzustellen, ob die äußersten Schleifen, die diesen SCRs entsprechen, vektorisiert werden können zwecks Abarbeitung auf der SIMD-Maschine;
(d) rekursives Ausführen des Schritts (c) auf diese SCRs dieser Unterteilungen;
(e) Generieren eines Codes für die SIMD-Maschine, gemäß dessen bestimmte Schleifen als vektorisierbar erkannt wurden;
dadurch gekennzeichnet, daß diese Analyse des Schritts (c) umfaßt:
(1) für jeden SCR Feststellen, ob die entsprechende äußerste Schleife jeweils mit der nachfolgenden inneren Schleife ausgetauscht werden kann, bis diese äußerste Schleife die innerste wird, ohne dabei die semantische Wirkung einer der Abhängigkeiten bezüglich dieser äußersten Schleife zu verändern; und
(2) Bilden eines Subgraphen aller dieser austauschbaren Abhängigkeiten und aller schleifenunabhängigen Abhängigkeiten und Kennzeichnen der entsprechenden Schleifen als vektorisierbar wenn dieser Subgraph azyklisch ist.

2. Verfahren gemäß Anspruch 1, in dem Anweisungen im Quellcode einer Verfahrenssprache laufend aus einer stark typisierten Sprache ausgewählt werden, die aus einem Satz stark-typisierter Sprachen einschließlich FORTRAN, FL/1, PASCAL, ALGOL, ADA und ihnen gleichwertigen Sprachen ausgewählt wird.

3. Verfahren gemäß Anspruch 1 oder 2, in dem dieses Verfahren ferner den Schritt der Festlegung eines kostenoptimierten Pfades durch den Abhängigkeitsgraphen in der SIMD-Maschine unter Berücksichtigung eines vorgegebenen Typs, der Anzahl und der Verteilung der Anweisungen, der Durchführungszeit für die Anweisungen, und der Kosten der zugeordneten Betriebselemente beinhaltet.

## Revendications

1. Méthode d'exploitation d'un calculateur pour la compilation d'un code objet à exécuter sur une machine SIMD, ledit code objet étant dérivé d'instructions en code source de langage à procédures, ledit code source comprenant des boucles imbriquées dans lesquelles au moins une boucle est le plus à l'intérieur et au moins une boucle est le plus à l'extérieur, comprenant les étapes de:
(a) convertir un code source en une chaîne de langages intermédiaires et optimiser ladite chaîne;
(b) former un graphe de dépendances à partir de la chaîne, ledit graphe de dépendances comprenant au moins un noeud, les noeuds du graphe de dépendances représentant des instructions dans la chaîne;
(c) segmenter le graphe de dépendances en des régions fortement connexes SCR, et analyser lesdites régions SCR pour s'assurer que les boucles le plus à l'extérieur correspondant auxdites régions SCR puissent être vectorisées en vue d'une exécution sur ladite machine SIMD;
(d) réaliser l'étape (c) de façon récursive sur lesdites régions SCR de ladite segmentation;
(e) engendrer un code pour ladite machine SIMD suivant les boucles qui ont été trouvées comme pouvant être vectorisées;
caractérisée en ce que ladite analyse de l'étape (c) comprend:
(1) s'assurer pour chaque région SCR que la boucle correspondante le plus à l'extérieur puisse être échangée avec chaque boucle interne successive jusqu'à ce que la bouche le plus à l'extérieur devienne la bouche le plus à l'intérieur sans changer l'effet sémantique de l'une quelconque des dépendances relatives à cette boucle le plus à l'extérieur; et
(2) former un sous-graphe de toutes ces dépendances interchangeables et marquer les boucles correspondantes comme pouvant être vectorisées si ledit sous-graphe est acyclique.

2. Méthode selon la revendication 1, dans laquelle les instructions de langage à procédures en code source sont régulièrement sélectionnées à partir d'un langage très spécifique obtenu à partir d'un groupe de langages très spécifiques tels que FORTRAN, PL/1, PASCAL, ALGOL, ADA, et leurs équivalents.

3. Méthode selon les revendications 1 ou 2, méthode comprenant en outre l'étape de s'assurer dans ladite machine SIMD un trajet de moindre coût dans le graphe de dépendances en tenant compte de la prédétermination du type, du nombre, et de la distribution des instructions, du temps d'exécution des instructions, et du coût des ressources associées.
